# EUROPEAN PATENT APPLICATION

(11) **EP 4 807 613 A1**
(43) Date of publication of application: **16.09.2026**
(21) Application number: 26164299.5
(22) Date of filing: 12.03.2026
(51) Int. Cl.: G06F 30/27

(54) **BATTERY DESIGN PLAN GENERATION SYSTEM AND OPERATION METHOD THEREOF**

(30) Priority: 14.03.2025 KR 20250033528
(71) Applicant: SAMSUNG SDI CO., LTD., Yongin-si, Gyeonggi-do 17084 (KR)
(72) Inventor: KANG, Minjeong, 17084 Yongin-si, Gyeonggi-do (KR); OH, Seunghyeon, 17084 Yongin-si, Gyeonggi-do (KR); KIM, Saekyeol, 17084 Yongin-si, Gyeonggi-do (KR)
(74) Representative: Gulde & Partner

(57) **Abstract**

A battery design plan generation system (100) according to an embodiment of present disclosure may comprise: a battery design plan adjustment device (120) configured to generate, by adjusting a first battery design plan, a second battery design plan; a simulation device (140) configured to generate a first simulation result data based on the second battery design plan; and a battery design plan evaluation device (140) configured to generate first feedback data by evaluating the second battery design plan based on the first simulation result data, and provide the first feedback data to the battery design plan adjustment device (120), wherein the battery design plan adjustment device (120) comprises a battery design adjustment module (121) configured to drive a large language model (LLM) that adjusts design information of the first battery design plan.

## Description

### BACKGROUND

### 1. Field

The present disclosure relates to a battery design plan generation system and an operation method thereof.

### 2. Description of the Related Art

As market demands for batteries have become increasingly diverse and complex, determining an optimized battery design plan is becoming increasingly difficult. For example, generating battery design plan by merely performing experiments repeatedly may take an excessive amount of time and incur a large cost.

### SUMMARY

One or more embodiments of the present disclosure provides a battery design plan generation system and its operation method configured to generate a battery design in less time and at a lower cost than current art battery design plan generation systems.

A battery design plan generation system according to an embodiment of present disclosure may include: a battery design plan adjustment device configured to generate, by adjusting a first battery design plan, a second battery design plan; a simulation device configured to generate a first simulation result data based on the second battery design plan; and a battery design plan evaluation device configured to generate first feedback data by evaluating the second battery design plan based on the first simulation result data, and provide the first feedback data to the battery design plan adjustment device, wherein the battery design plan adjustment device comprises a battery design adjustment module configured to drive a large language model (LLM) that adjusts design information of the first battery design plan. The battery design plan generation system may be a computer-implemented apparatus or device or system. In other words, it may comprise means for carrying out the mentioned steps. In other words, it may comprise a processor adapted to perform the mentioned steps of: generating a second battery design plan by adjusting a first battery design plan; generating a first simulation result data based on the second battery design plan; generating first feedback data by evaluating the second battery design plan based on the first simulation result data, and providing the first feedback data to the battery design plan adjustment device; and driving a large language model (LLM) that adjusts design information of the first battery design plan.

In an embodiment, the battery design plan adjustment device may be configured to determine the second battery design plan as a final battery design plan based on the first feedback data.

In an embodiment, the battery design plan adjustment device may be configured to generate a third battery design plan by further adjusting the second battery design plan based on the first feedback data.

In an embodiment, the simulation device may be further configured to generate a second simulation result data based on the third battery design plan, and the battery design plan evaluation device may be further configured to generate second feedback data by evaluating the third battery design plan based on the second simulation result data, and provide the second feedback data to the battery design plan adjustment device.

In an embodiment, the first battery design plan may be generated based on at least one of target specification information, constraint information, and characteristic information which are provided by a user.

In an embodiment, the battery design plan generation system may further comprise a battery design plan generation device configured to drive a generative artificial intelligence (AI) model that generates the first battery design plan based on the at least one of the target specification information, the constraint information, and the characteristic information.

In an embodiment, the battery design plan generation system may further comprise a database device configured to manage a design database, a process database, and a market database, wherein the LLM is configured to adjust the design information based on data provided from the database device.

In an embodiment, the design information may include at least one of a cell design decision element, an electrode design decision element, an electrolyte design decision element, and a separator design decision element.

In an embodiment, the LLM may be configured to be fine-tunes or adjusted based on latest or updated database, especially updated database information, provided from an external data source through the database device.

In an embodiment, the updated database information may include one or more of a currency exchange rate, a raw material price, and a competitive product price.

In an embodiment, the battery design plan adjustment device may further comprise: a battery process adjustment module configured to adjust process information of the first battery design plan.

In an embodiment, the battery process adjustment module may be configured to: determine at least one of a process sequence and a process line for the second battery design plan based on the process database.

In an embodiment, the simulation device may comprise: a simulation module configured to generate one or more simulation models corresponding to the second battery design; and an evaluation parameter measurement module configured to measure a plurality of evaluation parameters corresponding to the second battery design plan based on the one or more simulation models.

In an embodiment, the at least one of the one or more simulation models may be generated based on a digital twin model or second model for a sample battery manufactured based on the second battery design plan.

An operation method of a battery design plan generation system according to an embodiment of present disclosure may include: generating, for example by a processor, a raw battery design plan; generating, for example by the processor, an adjusted battery design plan by adjusting the raw battery design plan; generating, for example by the processor, a simulation result data for the adjusted battery design plan; and determining, for example by the processor, whether to determine the adjusted battery design plan as a final battery design plan based on the simulation result data.

In an embodiment, the generating of the adjusted battery design plan may comprise: adjusting, for example by the processor, design decision elements for the raw battery design plan; and adjusting, for example by the processor, process decision elements for the raw battery design.

Embodiments of the present disclosure are also directed to a system that includes a processor and a memory. The memory may store instructions that, when executed by the processor, cause the processor to: generate a first battery design plan based on user input; generate a second battery design plan based on adjusting the first battery design; generate simulation result data based on the second battery design plan; generate feedback data by evaluating the second battery design plan based on the simulation result data; and adjust the second battery design plan based on the feedback data.

### BRIEF DESCRIPTION OF THE DRAWINGS

FIG. 1 depicts a block diagram of a battery design plan generation system according to an embodiment of the present disclosure.
FIG. 2 depicts a block diagram of some of the components of FIG. 1 according to an embodiment of the present disclosure.
FIG. 3 depicts a table of an example battery design plan adjusted by a battery design adjustment module and a battery process adjustment module of FIG. 2.
FIG. 4 depicts a block diagram of a simulation device in the system of FIG. 1 according to an embodiment of the present disclosure.
FIG. 5 depicts a flowchart of an operation method of a battery design plan generation system according to an embodiment of the present disclosure.
FIG. 6 depicts a flowchart of an operation of FIG. 5 according to an embodiment of the present disclosure.

### DETAILED DESCRIPTION

Hereinafter, various embodiments will be described in detail and clearly to such an extent that an ordinary person of skill in the art may implement the present disclosure. Specific details such as detailed components and structures are merely provided to assist the overall understanding of the various embodiments. Therefore, it should be apparent to those skilled in the art that various changes and modifications of the embodiments described herein may be made without departing from the scope of the present disclosure. Moreover, descriptions of well-known functions and structures are omitted for clarity and brevity. In the following drawings or in the detailed description, configurations may be connected with any other components except for components illustrated in a drawing or described in the detailed description. The terms described below are terms defined in consideration of the functions of the present disclosure and are not limited to a specific function. The definitions of the terms should be determined based on the contents throughout the specification.

Components that are described in the detailed description with reference to the terms "driver", "block", and/or the like will be implemented with software, hardware, or a combination thereof. For example, the software may be a machine code, firmware, an embedded code, and/or an application software. For example, the hardware may include an electrical circuit, an electronic circuit, a processor, a computer, integrated circuit cores, a pressure sensor, a microelectromechanical system (MEMS), a passive element, or a combination thereof.

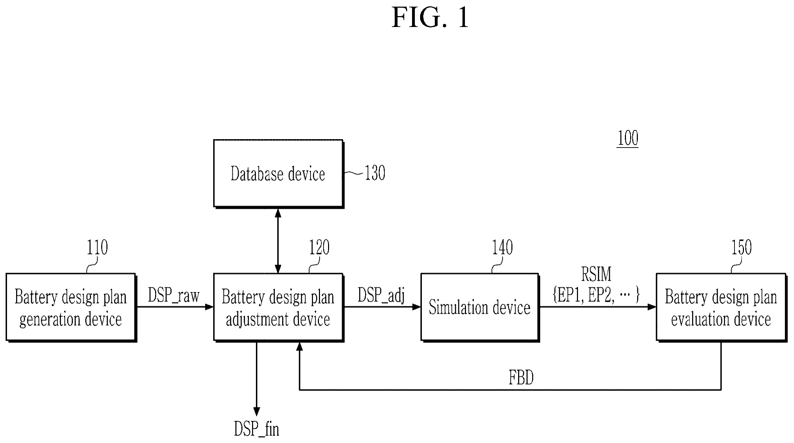

FIG. 1 depicts a block diagram of a battery design plan generation system according to an embodiment of the present disclosure. Referring to FIG. 1, a battery design plan generation system 100 may include a battery design plan generation device 110, a battery design plan adjustment device 120, a database device 130, a simulation device 140, and a battery design plan evaluation device 150. The one or more devices of FIG. 1 may be hosted in a single computer device, or distributed over various computer devices. The one or more devices of FIG. 1 may be implemented via hardware, firmware (e.g., via an ASIC) and/or by a more general purpose hardware, such as a central processing unit (CPU) configured to execute instructions stored in memory or a non-transitory storage medium, to carry out the functionality of the devices described herein.

According to one or more embodiments, the battery design plan generation system 100 generates a battery design plan (referred to as a final battery design plan) DSP_fin that may be used to produce a battery that satisfies one or more requirements such as lifespan, output voltage, heat resistance, form factor, and/or the like. According to embodiments of the present disclosure, the final battery design plan DSP_fin can be generated in a more efficient manner than current art design generation systems, allowing the cost and time required for battery development to be reduced. The battery design plan generation system 100 also provides technical improvements in the technical field of battery manufacturing by reducing manual adjustment by human and minimizing a number of real battery test. For example, the battery design plan generation system 100 may generate the final battery design plan DSP_fin by gradually optimizing a battery design plan with considering the one or more requirements, without (alternately, with reduced) manual adjustment by human and the real battery test.

The battery design plan generation device 110 may generate a raw battery design plan DSP_raw based on various types of design seed information or initial design information or input design information provided by a user. For example, the battery design plan generation device 110 may be implemented to drive a generative artificial intelligence (AI) model implemented to generate a raw battery design plan DSP_raw based on the design seed information.

In an embodiment, the design seed information may include at least one of target specification information, constraints information, requested feature information, and/or the like which are provided by the user. In some embodiments, the battery design plan generation device 110 may generate the raw battery design plan DSP_raw having specifications corresponding to the design seed information (or having specifications similar to the design seed information).

In an embodiment, the battery design plan generation device 110 may drive the generative Al model directly (e.g., itself). However, the scope of the present disclosure is not limited thereto, and the battery design plan generation device 110 may be implemented to process at least some of the various processing layers or processing operations included in the generative AI model, based on one or more of various types of cloud services, such as a computing cloud service, a data cloud service, an artificial intelligence model cloud service, and the like.

The battery design plan generation device 110 may provide the raw battery design plan DSP_raw to the battery design plan adjustment device 120.

In some embodiments, the battery design plan adjustment device 120 may predict that if a battery is produced based on the raw battery design plan DSP_raw, one or more of various types of evaluation indicators for the battery (e.g., cost, lifespan, heat resistance, and/or the like) may not satisfy the target (e.g., target specifications). For example, the battery design plan adjustment device 120 may predict that if a battery is produced based on the raw battery design plan DSP_raw, the cost will be excessively high (e.g., higher than a threshold cost) or the lifespan of the battery will not be sufficiently long (e.g., shorter than a threshold lifespan).

The battery design plan adjustment device 120 may generate an adjusted battery design plan DSP_adj by adjusting the raw battery design plan DSP_raw. For example, the battery design plan adjustment device 120 may adjust the raw battery design plan DSP_raw based on various types of databases provided from the database device 130.

In some embodiments, the battery design plan adjustment device 120 may generate an adjusted battery design plan DSP_adj that is expected to be used to produce a battery that satisfies various types of evaluation indicators, by adjusting the raw battery design plan DSP_raw.

In an embodiment, the battery design plan adjustment device 120 may adjust at least one of process information and design information for the raw battery design plan DSP_raw.

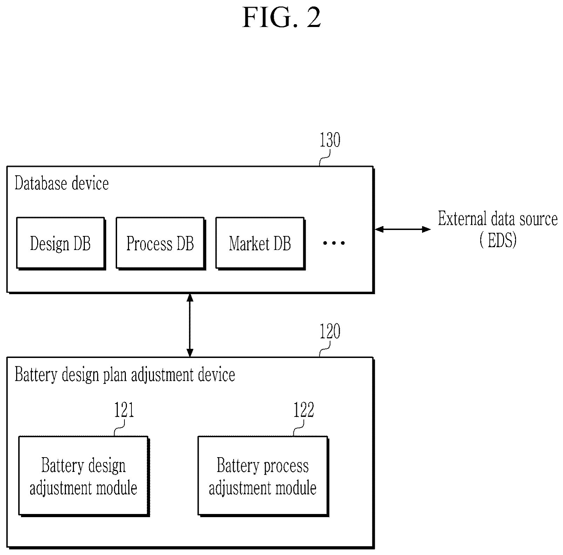

In an embodiment, the database device 130 may manage various types of databases related to battery design. The configuration and operation of the database device 130 are described in more detail with reference to FIG. 2 below.

The simulation device 140 may simulate the adjusted battery design plan DSP_adj. For example, the simulation device 140 may generate one or more simulation models for the adjusted battery design plan DSP_adj and generate simulation result data RSIM based thereon.

In an embodiment, the simulation model generated by the simulation device 140 may be generated based on a digital twin model (referred to as a second model) for a sample battery manufactured based on the adjusted battery design plan DSP_adj. For example, one or more simulation models generated by the simulation device 140 may be generated based on the digital twin model which is synchronized to the sample battery manufactured based on the adjusted battery design plan DSP_adj. However, the scope of the present disclosure is not limited thereto. For example, the simulation device 140 may generate one or more simulation models virtually based on (e..g, only based on) the adjusted battery design plan DSP_adj rather than based on a digital twin model (e.g., without manufacturing the sample battery), and may generate the simulation result data RSIM based thereon. In some embodiments, the scope of the present disclosure is not limited to the specific manner how the simulation device 140 generates the simulation result data RSIM.

The simulation result data RSIM may include various types of evaluation parameters EP for evaluating the adjusted battery design plan DSP_adj. For example, the simulation result data RSIM may include a first evaluation parameter EP1 related to a production cost (e.g., resource material cost, and/or the like) of the adjusted battery design plan DSP_adj, and may include a second evaluation parameter EP2 related to a performance (e.g., capacity, lifespan, and/or the like) of the adjusted battery design plan DSP_adj. However, the scope of the present disclosure is not limited to the type and number of evaluation parameters EP included in the simulation result data RSIM.

The battery design plan evaluation device 150 may receive the simulation result data RSIM. The battery design plan evaluation device 150 may evaluate the adjusted battery design plan DSP_adj based on the simulation result data RSIM. For example, the battery design plan evaluation device 150 may determine whether the adjusted battery design plan DSP_adj is appropriate (e.g., satisfies a threshold), based on the simulation result data RSIM. In some embodiments, the battery design plan evaluation device 150 may evaluate whether production cost and performance corresponding to the adjusted battery design plan DSP_adj are appropriate, based on the plurality of evaluation parameters EP included in the simulation result data RSIM.

In an embodiment, the battery design plan evaluation device 150 may evaluate the adjusted battery design plan DSP_adj as appropriate if one or more (e.g., each) of the plurality of evaluation parameters EP is within an identified or threshold (e.g., a predetermined) design target range (e.g., may be referred to as an appropriate range); and may evaluate the adjusted battery design plan DSP_adj as inappropriate if one or more of the plurality of evaluation parameters EP is out or outside of (e.g., exceeds) the predetermined design target range. However, the scope of the present disclosure is not limited to a specific method or algorithm how the battery design plan evaluation device 150 evaluates whether the adjusted battery design plan DSP_adj is appropriate.

In an embodiment, the design target range corresponding to one or more (e.g., each) of the plurality of evaluation parameters EP may be determined independently. For example, a design target range for the first evaluation parameter EP1 related to a battery production cost corresponding to the adjusted battery design plan DSP_adj may be determined as, for example, "$50 per 1Wh to $100 per 1Wh"; and a design target range for the second evaluation parameter EP2 related to a battery life corresponding to the adjusted battery design plan DSP_adj may be determined as, for example, "1000 to 3000 cycles", which is a number of full charge-discharge cycles that maintain a capacity of 80% or more of the initial maximum charge capacity. However, the scope of the present disclosure is not limited to specific examples of design target ranges corresponding to one or more (e.g., each) evaluation parameter EP.

The battery design plan evaluation device 150 may generate feedback data FBD for the adjusted battery design plan DSP_adj. For example, the battery design plan evaluation device 150 may generate feedback data FBD based on the evaluation result for the adjusted battery design plan DSP_adj.

Feedback data FBD may include various information about the adjusted battery design plan DSP_adj. For example, the feedback data FBD may include information indicating information to be supplemented for the adjusted battery design plan DSP_adj and may include information indicating whether the adjusted battery design plan DSP_adj is appropriate in view of cost or performance. However, the scope of the present disclosure is not limited to the specific type of information included in the feedback data FBD.

The battery design plan evaluation device 150 may provide the feedback data FBD to the battery design plan adjustment device 120. In some embodiments, the battery design plan evaluation device 150 may provide as feedback, to the battery design plan adjustment device 120, whether the adjusted battery design plan DSP_adj is appropriate.

The battery design plan adjustment device 120 may receive the feedback data FBD.

If the feedback data FBD indicates that the adjusted battery design plan DSP_adj is appropriate (for example, if the feedback data FBD includes a suitability flag bit "1" indicating that the adjusted battery design plan DSP_adj is appropriate), the battery design plan adjustment device 120 may identify (e.g., recognize) that the present adjusted battery design plan DSP_adj is appropriate. In this case, the battery design plan adjustment device 120 may output the present adjusted battery design plan DSP_adj (e.g., battery design plan DSP_adj of current or existing battery design plan DSP_adj) as the final battery design plan DSP_fin. The suitability flag bit may be set to "1" based on comparing one or more of the evaluation parameters EP against one or more target parameters and determining that the one or more of the evaluation parameters are within a threshold range of the one or more target parameters.

In some embodiments, if the feedback data FBD indicates that the adjusted battery design plan DSP_adj is not appropriate (for example, if the feedback data FBD includes the suitability flag bit "0" indicating that the adjusted battery design plan DSP_adj is not appropriate), the battery design plan adjustment device 120 may identify that the present adjusted battery design plan DSP_adj is not appropriate. The suitability flag bit may be set to "0" based on comparing one or more of the evaluation parameters EP against one or more target parameters and determining that the one or more of the evaluation parameters are outside the threshold range of the one or more target parameters. In this case, the battery design plan adjustment device 120 may further adjust the adjusted battery design plan DSP_adj based on the feedback data FBD. For example, the battery design plan adjustment device 120 may generate a new adjusted battery design plan DSP_adj by further adjusting the present (e.g., existing) adjusted battery design plan DSP_adj based on the feedback data FBD. The battery design plan adjustment device 120 may provide the new adjusted battery design plan DSP_adj to the simulation device 140. In some embodiments, the simulation device 140 may generate a new simulation result data RSIM for the new adjusted battery design plan DSP_adj, and the battery design plan evaluation device 150 may generate a new feedback data FBD based on the new simulation result data RSIM.

In some embodiments, the battery design plan adjustment device 120 may repeat adjustments for the adjusted battery design plan DSP_adj. In some embodiments, as adjustments to the adjusted battery design plan DSP_adj are repeated, one or more of a marketability and a performance of the battery produced based on the adjusted battery design plan DSP_adj may be improved. In this regard, performance of the battery that is produced based on the adjusted battery design plan may be improved because the adjusted battery design plan DSP_adj has been generated so as to be expected to comply various requirements, such as the performance and the marketability.

In an embodiment, the simulation device 140 may provide one or more evaluation parameters EP for the adjusted battery design plan DSP_adj to the database device 130. The database device 130 may further store the configuration of the adjusted battery design plan DSP_adj and one or more of the evaluation parameters EP. In some embodiments, as adjustments to the adjusted battery design plan DSP_adj are repeated, a database of the relationship between the configuration of the adjusted battery design plan DSP_adj and one or more evaluation parameters EP may be accumulated in the database device 130, so that the probability that the battery design plan adjustment device 120 appropriately adjusts the adjusted battery design plan DSP_adj may be increased.

FIG. 2 depicts a block diagram of some of the components of FIG. 1 according to an embodiment of the present disclosure. Referring to FIGS. 1 and 2, the battery design plan adjustment device 120 may include a battery design adjustment module 121 and a battery process adjustment module 122. Although the modules 121, 122 are assumed to be separate functional units, a person of skill in the art will recognize that the functionality of the modules may be combined or integrated into a single module, or further subdivided into further sub-modules without departing from the scope of the inventive concept.

The database device 130 may manage various types of databases (DB). For example, the database device 130 may manage a design database, a process database, and a market database. However, the scope of the present disclosure is not limited thereto, and the database device 130 may further manage various types of databases, such as an academic DB, a mass media DB, and/or the like. In some embodiments, the scope of the present disclosure is not limited to the type of databases managed in the database device 130.

In an embodiment, the design database may refer to a database related to a battery design. For example, the design database may include design data representing characteristics and performance of implementation (e.g., material, shape, and/or the like) of one or more (e.g., each) elements of the battery; and may include design data representing production technology for one or more (e.g., each) elements of the battery; and/or the like. However, the scope of the present disclosure is not limited thereto. For example, the design database may include design data representing a plurality of performance information (e.g., evaluation parameters EP for the adjusted battery design plan DSP_adj) which are respectively corresponding to different battery designs.

In an embodiment, the process database may include data such as yield, capacity, and distribution for one or more (e.g., each) available process facilities. However, the scope of the present disclosure is not limited thereto. For example, the process database may further include different types of process data, such as process operating costs, process consuming time, and/or the like.

In an embodiment, the market database may include various types of data related to a battery market. For example, the market database may include different types of market data, such as currency exchange rate, resource material prices, and competitive product prices.

The database device 130 may update the databases based on information provided from an external data source EDS. For example, the database device 130 may access the external data source EDS in response to a request from the battery design plan adjustment device 120. The database device 130 may receive the latest or updated information (e.g., currency exchange rate, resource material prices, competitive product prices, market trends, and/or the like) from the external data source EDS; and may update one or more of the design database, the process database, and the market database based thereon.

In an embodiment, the external data source EDS may be of various types, such as web, cloud, public application programming interface (API), intranet, and/or the like. In some embodiments, the scope of the present disclosure is not limited to the type of source of the latest information provided to the database device 130.

The battery design plan adjustment device 120 may access the database device 130. For example, the battery design plan adjustment device 120 may receive various types of data, such as design data, process data, and market data, from the database device 130.

The battery design plan adjustment device 120 may adjust process information and design information for a battery design plan (e.g., a raw battery design (DSP_raw) or an adjusted battery design plan DSP_adj) based on data provided by the database device 130.

The battery design adjustment module 121 may adjust design information for a battery design plan. For example, the battery design adjustment module 121 may adjust design information for a battery design plan based on information stored in the design database and the market database. However, the scope of the present disclosure is not limited thereto, and the battery design adjustment module 121 may adjust design information based on one or more of various types of databases, such as the process database, the academic database, the mass media press database, and/or the like.

Design information adjusted by the battery design adjustment module 121 may correspond to one or more of cell design, electrode design, electrolyte design, and separator design. However, the scope of the present disclosure is not limited thereto, and the battery design adjustment module 121 may further adjust other types of design information.

In an embodiment, the battery design adjustment module 121 may be implemented to drive a large language model (LLM) which is configured to adjust one or more of the cell design, electrode design, electrolyte design, and separator design based on the design database and the market database.

In an embodiment, the battery design adjustment module 121 may drive the LLM directly (e.g., itself). However, the scope of the present disclosure is not limited thereto, and the battery design adjustment module 121 may be implemented to process at least some of the various processing layers or processing operations included in the LLM based on one or more of various types of cloud services, such as a computing cloud service, a memory cloud service, an AI model cloud service, and the like.

In an embodiment, the battery design plan adjustment device 120 may request the database device 130 to update the database, and then access the design database and market database of the database device 130. In some embodiments, the battery design plan adjustment device 120 may adjust or fine-tune the LLM based on the latest or updated database (e.g., currency exchange rate, raw material prices, competitive product prices, market trends, and/or the like). For example, the battery design plan adjustment device 120 may update the LLM to adjust design decision factors of the battery design plan based on the latest or updated database. In some embodiments, the update of the LLM based on (e.g., after) the updated database may help reduce hallucination phenomenon of the LLM driven by the battery design plan adjustment device 120, and the probability that the battery design plan adjustment device 120 generates a battery design with high marketability (e.g., marketability above a threshold value) and performance may be increased.

The battery process adjustment module 122 may adjust process information for the battery design plan. For example, the battery process adjustment module 122 may adjust process information for a battery design plan based on the process database. However, the scope of the present disclosure is not limited thereto, and the battery process adjustment module 122 may also adjust process information based on one or more of various types of databases, such as the design database, the market database, the academic database, the mass media database, and/or the like.

Process information adjusted by the battery process adjustment module 122 may correspond to one or more of the process sequence and process line. However, the scope of the present disclosure is not limited thereto, and the battery process adjustment module 122 may further adjust other types of process information.

In an embodiment, the battery process adjustment module 122 may determine an optimal process for implementing design information adjusted by the battery design adjustment module 121 based on the process database. For example, the battery process adjustment module 122 may identify the process line and/or process sequence that implements the design information adjusted by the battery design adjustment module 121 with a production cost, production speed, production yield, production distribution, and/or the like, that satisfies a criterion (e.g., a threshold).

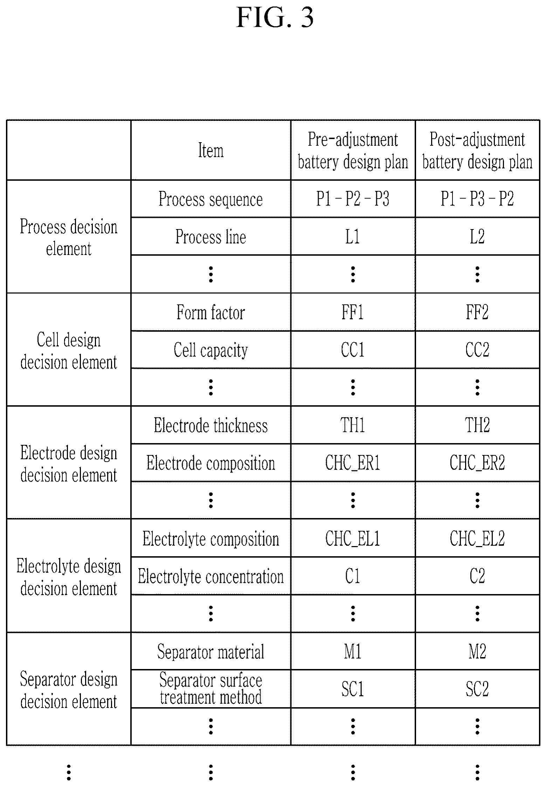

FIG. 3 depicts a table of an example battery design plan adjusted by a battery design adjustment module and a battery process adjustment module of FIG. 2. Referring to FIGS. 1 to 3, a battery design plan (e.g., a raw battery design plan DSP_raw or an adjusted battery design plan DSP_adj) may include various types of process decision elements and design decision elements. For example, the battery design plan may include various types of process decision elements, such as process sequence, process line, and/or the like. The battery design may include various types of design decision elements, such as cell design decision elements, electrode design decision elements, electrolyte design decision elements, and separator design decision elements. For example, a battery design plan may include various types of cell design decision elements, such as form factor, cell capacity, and/or the like; various types of electrode design decision elements, such as electrode thickness, electrode composition, and/or the like; various types of electrolyte design decision elements, such as electrolyte composition, electrolyte concentration, and/or the like; and various types of separator design decision elements, such as separator material, separator surface treatment method, and/or the like. However, the scope of the present disclosure is not limited thereto. For example, a battery design plan may further include various types of process decision elements, such as process operation time, whether additional processes are required, and/or the like; and may further include various types of design decision elements, such as form of cell, type of electrolyte solution, and/or the like. In an embodiment, the decision elements described above may also be referred as decision factors.

The battery design adjustment module 121 may adjust various types of design decision elements for the battery design plan. For example, the battery design adjustment module 121 may adjust one or more of the cell design decision elements, the electrode design decision elements, the electrolyte design decision elements, and the separator design decision elements based on the design database and the market database so as to improve one or more of the performance and marketability of the battery.

For a more detailed example, the battery design adjustment module 121 may change the form factor of battery cells from "FF1" to "FF2", change the cell capacity from "CC1" to "CC2", change the electrode thickness from "TH1" to "TH2", change the electrode composition from "CHC_ER1" to "CHC_ER2", change the electrolyte composition from "CHC_EL1" to "CHC_EL2", change the electrolyte concentration from "C1" to "C2", change the separator material from "M1" to "M2", and change the separator surface treatment method from "SC1" to "SC2". However, the scope of the present disclosure is not limited to the number and types of design decision elements that the battery design adjustment module 121 changes or may change.

The battery process adjustment module 122 may adjust various types of process decision elements. For example, the battery process adjustment module 122 may adjust one or more of the process decision elements based on the process database so as to improve the production efficiency of the battery (e.g., production cost, production yield, production speed, and/or the like). For a more detailed example, the battery process adjustment module 122 may change the process sequence from the "P1-P2-P3" sequence to the "P1-P3-P2" sequence, and change the process line to be used for battery production from "L1" to "L2". However, the scope of the present disclosure is not limited to the number and types of process decision elements that the battery process adjustment module 122 changes.

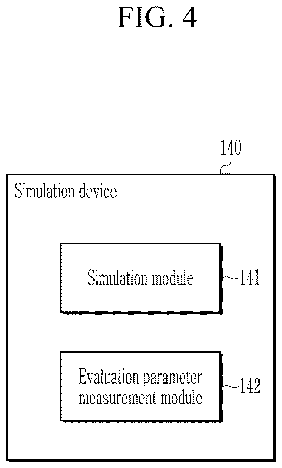

FIG. 4 depicts a block diagram of a simulation device in the system of FIG. 1 according to an embodiment of the present disclosure. Referring to FIGS. 1 to 4, the simulation device 140 may include a simulation module 141 and an evaluation parameter measurement module 142.

The simulation module 141 may generate one or more simulation models based on the adjusted battery design plan DSP_adj. For example, the simulation module 141 may generate various types of battery virtual simulation models such as for battery durability due to environmental factors (e.g., temperature or humidity), or such as for battery deterioration due to the age of the battery and a number of charge/discharge cycles of the battery, based on the adjusted battery design plan DSP_adj.

In an embodiment, the simulation module 141 may generate a simulation model based on a real battery generated based on the adjusted battery design plan DSP_adj. For example, the simulation module 141 may generate some (or all) of one or more simulation models based on a digital twin model synchronized to a sample battery (e.g., real battery) generated based on the adjusted battery design plan DSP_adj. In some embodiments, various types of parameters for the digital twin model may be updated (e.g., in real time) based on the state of the sample battery. In some embodiments, the digital twin model may be calibrated (e.g., fine-tuned) based on the state of the sample battery. In this case, some (or all) of one or more simulation models may be generated based on the digital twin model whose accuracy may be enhanced. Therefore, the simulation module 141 may be able to generate more accurate simulation model.

In an embodiment, the simulation module 141 may require computing resources (e.g., a large amount of computing resources) to generate one or more simulation models corresponding to different conditions. Accordingly, it may take a time and cost for the simulation module 141 to generate the one or more simulation models.

In an embodiment, the simulation module 141 may generate some of one or more simulation models based on various types of artificial intelligence algorithms. For example, the simulation module 141 may generate some of the simulation models respectively corresponding to different conditions based on the artificial intelligence algorithm. In this case, since the time and cost required for the simulation module 141 to generate a plurality of simulation models may be minimized, the time and cost required for the battery design plan generation system 100 to generate the final battery design plan DSP_fin may be minimized or reduced. For example, the simulation module 141 may generate a simulation model corresponding to a third condition between the first and second conditions based on a simulation model corresponding to a first condition and a simulation model corresponding to a second condition. For example, the simulation module 141 may generate a battery charge/discharge simulation model when the temperature is 50 Celsius (e.g., a third condition) based on a battery charge/discharge simulation model when the temperature is 40 Celsius (e.g., a first condition), and a battery charge/discharge simulation model when the temperature is 60 Celsius (e.g., a second condition). In other words, the simulation module 141 may generate a simulation model corresponding to the third condition based on other simulation models instead of directly generating a simulation model corresponding to the third condition. In this case, the time and cost required for the simulation module 141 to generate the third simulation model may be minimized or reduced.

The evaluation parameter measurement module 142 may generate simulation result data RSIM based on the one or more simulation models generated by the simulation module 141. For example, the evaluation parameter measurement module 142 may measure various types of evaluation parameters EP, such as production cost, capacity, and lifespan, based on the one or more simulation models. The evaluation parameter measurement module 142 may provide simulation result data RSIM including various types of evaluation parameters EP to the battery design plan evaluation device 150.

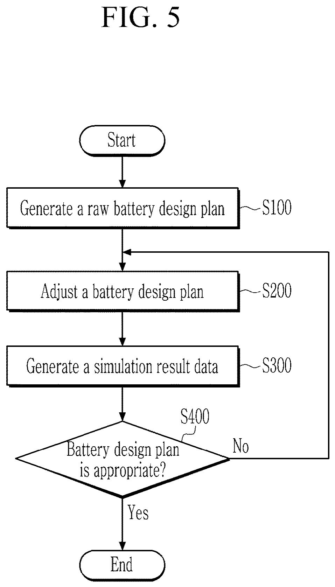

FIG. 5 depicts a flowchart of an operation method of a battery design plan generation system according to an embodiment of the present disclosure. Referring to FIGS. 1 to 5, at operation S100, the battery design plan generation system 100 may generate a raw battery design plan DSP_raw. For example, the battery design plan generation device 110 may generate the raw battery design plan DSP_raw based on various types of design seed information provided by a user.

At operation S200, the battery design plan generation system 100 may adjust a battery design plan. For example, the battery design plan adjustment device 120 may generate an adjusted battery design plan DSP_adj by adjusting the raw battery design plan DSP_raw.

At operation S300, the battery design plan generation system 100 may generate simulation result data RSIM corresponding to the adjusted battery design plan DSP_adj. For example, the simulation device 140 may generate simulation result data RSIM corresponding to the adjusted battery design plan DSP_adj. For example, the simulation module 141 may generate one or more simulation models corresponding to the adjusted battery design plan DSP_adj. The evaluation parameter measurement module 142 may measure evaluation parameters EP included in the simulation result data RSIM based on one or more simulation models.

At operation S300, the battery design plan generation system 100 may determine whether the battery design plan is appropriate. For example, the battery design plan evaluation device 150 may evaluate the adjusted battery design plan DSP_adj based on the simulation result data RSIM. For a more detailed example, the battery design plan evaluation device 150 may evaluate whether the adjusted battery design plan DSP_adj is appropriate based on a plurality of evaluation parameters EP included in the simulation result data RSIM.

If the battery design is determined to be appropriate, the operation of the battery design plan generation system 100 may be terminated. For example, the battery design plan evaluation device 150 may provide feedback data FBD indicating that the adjusted battery design plan DSP_adj is appropriate to the battery design plan adjustment device 120. In this case, the battery design plan adjustment device 120 may determine the battery design plan generated in the above-described operation S200 as a final battery design plan DSP_fin. In some embodiments, a prompt or signal is provided to a manufacturing system, and a battery may be manufactured according to the final battery design plan.

If the battery design is determined to be inappropriate, the battery design plan generation system 100 may perform the operation S200 described above one or more times, for example repeatedly. For example, the battery design plan evaluation device 150 may provide feedback data FBD indicating that additional adjustments to the adjusted battery design plan DSP_adj are to be made to the battery design plan adjustment device 120. In this case, the battery design plan adjustment device 120 may perform the operation S200 described above one or more times, for example repeatedly. For example, the battery design plan adjustment device 120 may generate a new adjusted battery design plan DSP_adj (e.g., a second adjusted battery design plan) by adjusting an adjusted battery design plan DSP_adj (e.g., a first adjusted battery design plan). In this manner, the battery design plan generation system 100 may generate the final battery design plan DSP_fin by performing operations S200 to S400 described above one or more times, for example repeatedly, until the battery design plan is determined to be appropriate.

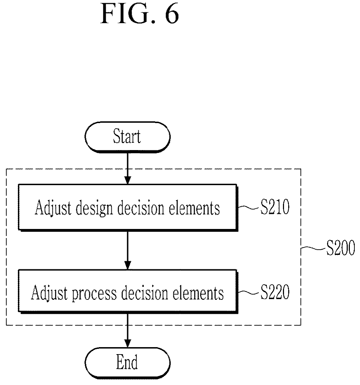

FIG. 6 depicts a flowchart of the operation S200 of FIG. 5 according to an embodiment of the present disclosure. Referring to FIGS. 1 to 6, operation S200 may include operations S210 and S220 below.

At operation S210, the battery design plan adjustment device 120 may adjust design decision elements of the battery design. For example, the battery design adjustment module 121 may adjust one or more types of design decision elements, such as cell design decision elements, electrode design decision elements, electrolyte design decision elements, and separator design decision elements, based on a design database and a market database.

At operation S220, the battery design plan adjustment device 120 may adjust process decision elements of the battery design. For example, the battery process adjustment module 122 may adjust various types of process decision elements such as process sequence, process line, and/or the like based on the process database.

FIG. 6 is a representative example in which the battery design plan adjustment device 120 sequentially performs operations S210 and S220, but the scope of the present disclosure is not limited thereto. For example, the battery design plan adjustment device 120 may perform operation S210 after performing operation S220, may perform operation S210 concurrently with operation 220, or may perform only one of operations S210 and S220.

While the present disclosure has been described with reference to embodiments thereof, it will be apparent to those of ordinary skill in the art that various changes and modifications may be made thereto without departing from the scope of the present disclosure as set forth in the following claims.

## Claims

1. A battery design plan generation system (100), comprising:
a battery design plan adjustment device (120) configured to generate, by adjusting a first battery design plan, a second battery design plan;
a simulation device (140) configured to generate a first simulation result data based on the second battery design plan; and
a battery design plan evaluation device (150) configured to generate first feedback data by evaluating the second battery design plan based on the first simulation result data, and provide the first feedback data to the battery design plan adjustment device (120),
wherein the battery design plan adjustment device (120) comprises a battery design adjustment module (121) configured to drive a large language model (LLM) that adjusts design information of the first battery design plan.

2. The battery design plan generation system (100) as claimed in claim 1, wherein the battery design plan adjustment device (120) is configured to determine the second battery design plan as a final battery design plan based on the first feedback data.

3. The battery design plan generation system (100) as claimed in claim 1 or 2, wherein the battery design plan adjustment device (120) is configured to generate a third battery design plan by further adjusting the second battery design plan based on the first feedback data.

4. The battery design plan generation system (100) as claimed in claim 3, wherein:
the simulation device (140) is further configured to generate a second simulation result data based on the third battery design plan, and
the battery design plan evaluation device (150) is further configured to generate second feedback data by evaluating the third battery design plan based on the second simulation result data, and provide the second feedback data to the battery design plan adjustment device (120).

5. The battery design plan generation system (100) as claimed in any of the claims 1 through 4, wherein:
the first battery design plan is generated based on at least one of target specification information, constraint information, and characteristic information which are provided by a user.

6. The battery design plan generation system (100) as claimed in claim 5, further comprising:
a battery design plan generation device (110) configured to drive a generative artificial intelligence, AI, model that generates the first battery design plan based on the at least one of the target specification information, the constraint information, and the characteristic information.

7. The battery design plan generation system (100) as claimed in any of the claims 1 through 6, further comprising a database device (130) configured to manage a design database, a process database, and a market database,
wherein the LLM is configured to adjust the design information based on data provided from the database device (130).

8. The battery design plan generation system (100) as claimed in claim 7, wherein:
the design information includes at least one of a cell design decision element, an electrode design decision element, an electrolyte design decision element, and a separator design decision element.

9. The battery design plan generation system (100) as claimed in claim 7 or 8, wherein:
the LLM is configured to be adjusted based on updated database information provided from an external data source through the database device (130).

10. The battery design plan generation system (100) as claimed in claim 9, wherein the updated database information includes one or more of a currency exchange rate, a raw material price, and a competitive product price.

11. The battery design plan generation system (100) as claimed in any of the claims 1 through 10, wherein the battery design plan adjustment device (120) further comprises:
a battery process adjustment module (122) configured to adjust process information of the first battery design plan.

12. The battery design plan generation system (100) as claimed in claim 11, wherein the battery process adjustment module (122) is configured to:
determine at least one of a process sequence and a process line for the second battery design plan based on the process database.

13. The battery design plan generation system (100) as claimed in any of the claims 1 through 12, wherein the simulation device (140) comprises:
a simulation module (141) configured to generate one or more simulation models corresponding to the second battery design; and
an evaluation parameter measurement module configured to measure a plurality of evaluation parameters corresponding to the second battery design plan based on the one or more simulation models.

14. The battery design plan generation system (100) as claimed in claim 13, wherein the at least one of the one or more simulation models are generated based on a digital twin model for a sample battery manufactured based on the second battery design plan.

15. A system (100) comprising:
a processor; and
a memory, wherein the memory stores instructions that, when executed by the processor, cause the processor to:
generate a first battery design plan based on user input;
generate a second battery design plan based on adjusting the first battery design;
generate simulation result data based on the second battery design plan;
generate feedback data by evaluating the second battery design plan based on the simulation result data; and
adjust the second battery design plan based on the feedback data.
